# FASCICULE DE BREVET EUROPEEN

(11) **EP 3 303 051 B1**
(45) Date de publication et mention de la délivrance du brevet: **24.07.2019**
(21) Numéro de dépôt: 16731232.1
(22) Date de dépôt: 27.05.2016
(51) Int. Cl.: B60N 2/80

(54) **APPUI-TÊTE DE SIÈGE DE VÉHICULE AUTOMOBILE**
KOPFSTÜTZE FÜR EINEN KRAFTFAHRZEUGSITZ
HEADREST FOR A MOTOR VEHICLE SEAT

(30) Priorité: 29.05.2015 FR 1554880
(43) Date de publication de la demande: 11.04.2018
(73) Titulaire: Cera TSC, 75008 Paris (FR)
(72) Inventeur: BRICE, Patrick, 54110 Hudiviller (FR); JACQUET, Bruno, 75008 Paris (FR); DELUS, Christian, 51380 Verzy (FR); NOIRET, Dominique, 51110 Bourgogne (FR)
(74) Mandataire: Sayettat, Julien Christian
(86) Numéro de dépôt international: PCT/FR2016/051270
(87) Numéro de publication internationale: WO 2016/193594

(56) Documents cités:
- DE-U1- 29 622 960
- FR-A1- 2 775 450
- FR-A1- 2 775 450
- US-A1- 2006 001 307

## Description

L'invention concerne un appui-tête de siège de véhicule automobile et un procédé de réalisation d'un tel appui-tête.

Il est connu de réaliser un appui-tête de siège de véhicule automobile, ledit appui-tête comprenant :
- une armature de liaison au dossier dudit siège,
- un boitier en matériau plastique moulé d'absorption d'énergie - en cas de collision de la tête d'un passager sur ledit appui-tête - monté en haut de ladite armature,
- un bloc de matériau de rembourrage - notamment à base de mousse élastiquement compressible, notamment de polyuréthanne - disposé contre une face avant dudit boitier,
- une couche de matériau de revêtement recouvrant ledit bloc, ladite couche comprenant une bande périphérique retournée contre une zone périphérique arrière dudit boitier, ladite bande étant fixée à ladite zone par des moyens de fixation,
- une coque de masquage associé en arrière dudit boitier, ladite coque étant plaquée en périphérie de ladite couche.

Selon une réalisation connue (voir DE-U-296 22 960), la coque comprend, faisant saillie de sa face d'envers, des moyens d'emboitement coopérant avec des moyens respectifs réciproques, lesdits moyens étant agencés de sorte que l'emboitement se fasse selon un axe sensiblement longitudinal, c'est à dire en déplaçant ladite coque sensiblement horizontalement vers l'avant.

Avec un tel agencement, l'emboitement des moyens d'emboitement avec les moyens réciproque se fait « en aveugle », ce qui peut occasionner une difficulté de montage pour l'opérateur de fabrication.

L'invention a pour but de pallier cet inconvénient.

A cet effet, et selon un premier aspect, l'invention propose un appui-tête de siège de véhicule automobile, ledit appui-tête comprenant :
- une armature de liaison au dossier dudit siège,
- un boitier en matériau plastique moulé d'absorption d'énergie monté en haut de ladite armature,
- un bloc de matériau de rembourrage - notamment à base de mousse élastiquement compressible, notamment de polyuréthanne - disposé contre une face avant dudit boitier,
- une couche de matériau de revêtement recouvrant ledit bloc, ladite couche comprenant une bande périphérique retournée contre une zone périphérique arrière dudit boitier, ladite bande étant fixée à ladite zone par des moyens de fixation,
- une coque de masquage associé en arrière dudit boitier, ladite coque étant plaquée en périphérie de ladite couche,
ledit appui-tête présentant en outre les caractéristiques suivantes :
- ladite coque comprend au moins une patte d'ancrage supérieure - respectivement inférieure - faisant saillie de sa face d'envers, ladite patte étant en forme de crochet comprenant une première partie insérée dans un orifice prévu en arrière dudit boitier et une deuxième partie pointant vers le haut - respectivement vers le bas - en prenant appui en périphérie interne dudit orifice de manière à plaquer ladite coque,
- ladite coque comprend en outre - faisant saillie de sa face d'envers - au moins un moyen d'emboitement inférieur - respectivement supérieur - sur un moyen réciproque prévu en arrière dudit boitier, lesdits moyens étant agencés de sorte que l'emboitement se fasse selon un axe sensiblement longitudinal.

Dans cette description, les termes de positionnement dans l'espace (haut, bas, supérieur, inférieur, longitudinal, transversal, latéral, avant, arrière, vertical, horizontal, ...) sont pris en référence à l'appui-tête disposé en configuration d'utilisation dans le véhicule.

Avec l'agencement proposé, le montage de la coque sur le boitier se fait selon les étapes suivantes :
- présenter la coque en position inclinée par rapport à sa position une fois montée sur le boitier, de manière à permettre l'introduction de la deuxième partie de patte dans l'orifice correspondant,
- introduire ladite deuxième partie dans ledit orifice,
- actionner ladite coque en rotation de manière à réaliser, en fin de rotation, l'emboitement entre un moyen d'emboitement et son moyen réciproque, ladite deuxième partie prenant appui en périphérie interne dudit orifice de manière à plaquer ladite coque en périphérie de ladite couche.

L'opérateur de fabrication peut ainsi réaliser le montage de la coque sur le boitier en visualisant l'introduction d'une patte dans son orifice, un moyen d'emboitement étant ensuite guidé dans son moyen réciproque du fait de l'indexation assurée par le positionnement de ladite patte dans ledit orifice, ledit montage étant facilité du fait qu'il ne se fait plus « en aveugle ».

Selon un deuxième aspect, l'invention propose un procédé de réalisation d'un tel appui-tête.

D'autres particularités et avantages de l'invention apparaîtront dans la description qui suit, faite en référence aux figures jointes, dans lesquelles :
- la figure 1 est une vue en perspective partielle d'un appui-tête en cours de montage de la coque selon une réalisation, ladite coque étant présentée en position inclinée par rapport à sa position une fois montée sur le boitier,
- la figure 2 est une vue de détail en coupe longitudinale verticale analogue à la figure 1, la deuxième partie de patte étant introduite dans l'orifice correspondant,
- la figure 3 est une vue de détail en coupe longitudinale verticale de la réalisation de la figure 1, la coque étant en cours d'actionnement en rotation,
- les figures 4a et 4b sont des vues de détail en coupe longitudinale verticale de la réalisation de la figure 1, la coque étant montée sur le boitier.

En référence aux figures, on décrit un appui-tête 1 de siège de véhicule automobile, ledit appui-tête comprenant :
- une armature 2 - comprenant ici deux tiges métalliques tubulaires - de liaison au dossier dudit siège,
- un boitier 3 en matériau plastique moulé d'absorption d'énergie monté en haut de ladite armature,
- un bloc 4 de matériau de rembourrage - notamment à base de mousse élastiquement compressible, notamment de polyuréthanne - disposé contre une face avant dudit boitier,
- une couche de matériau de revêtement 5 - par exemple à base de tissu ou de cuir - recouvrant ledit bloc, ladite couche comprenant une bande périphérique 6 retournée contre une zone périphérique arrière dudit boitier, ladite bande étant fixée à ladite zone par des moyens de fixation 15,
- une coque 7 de masquage associé en arrière dudit boitier, ladite coque étant plaquée en périphérie de ladite couche,
ledit appui-tête présentant en outre les caractéristiques suivantes :
- ladite coque comprend au moins une patte 8 d'ancrage supérieure - respectivement inférieure en variante non représentée - faisant saillie de sa face d'envers, ladite patte étant en forme de crochet comprenant une première partie 9 insérée dans un orifice 10 prévu en arrière dudit boitier et une deuxième partie 11 pointant vers le haut - respectivement vers le bas en variante non représentée - en prenant appui en périphérie interne dudit orifice de manière à plaquer ladite coque,
- ladite coque comprend en outre - faisant saillie de sa face d'envers - au moins un moyen d'emboitement 12 inférieur - respectivement supérieur en variante non représentée - sur un moyen réciproque 13 prévu en arrière dudit boitier, lesdits moyens étant agencés de sorte que l'emboitement se fasse selon un axe sensiblement longitudinal 14 .

Selon la réalisation représentée, la coque 7 comprend deux pattes 8 d'ancrage disposées latéralement de part et d'autre.

Selon la réalisation représentée, la coque 7 comprend deux moyens d'emboitement 12 disposés latéralement de part et d'autre.

Selon la réalisation représentée, la coque comprend en outre un moyen d'emboitement 12 central.

Selon la réalisation représentée, un moyen d'emboitement 12 est sous forme de harpon, ledit harpon étant élastiquement déformable entre une configuration rétractée d'introduction et une configuration déployée d'ancrage de manière à coopérer avec un moyen réciproque 13 en forme d'orifice de retenue dudit harpon en configuration déployée.

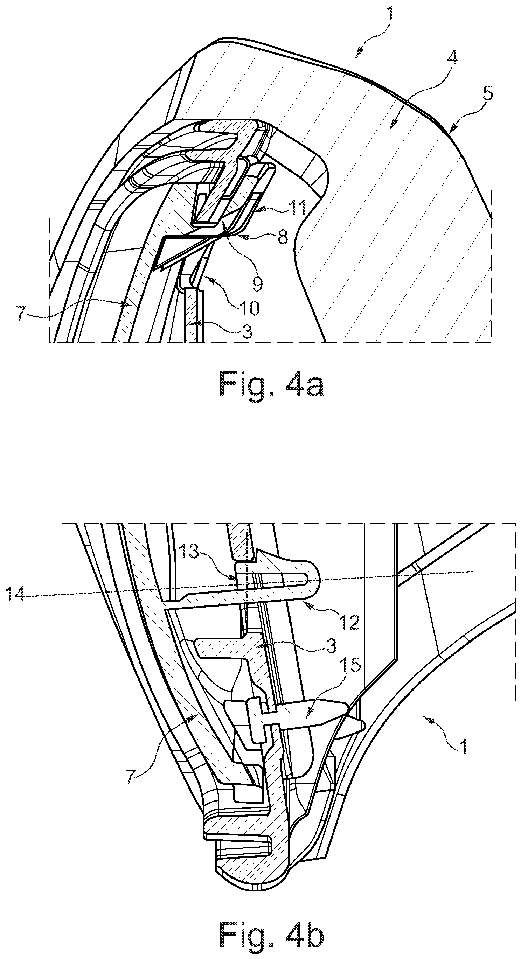

Selon la réalisation représentée (voir figure 4b), les moyens de fixation 15 sont sous forme de pions traversant des trous prévus sur la bande 6 et insérés en force dans des trous prévus en zone périphérique arrière du boitier 3.

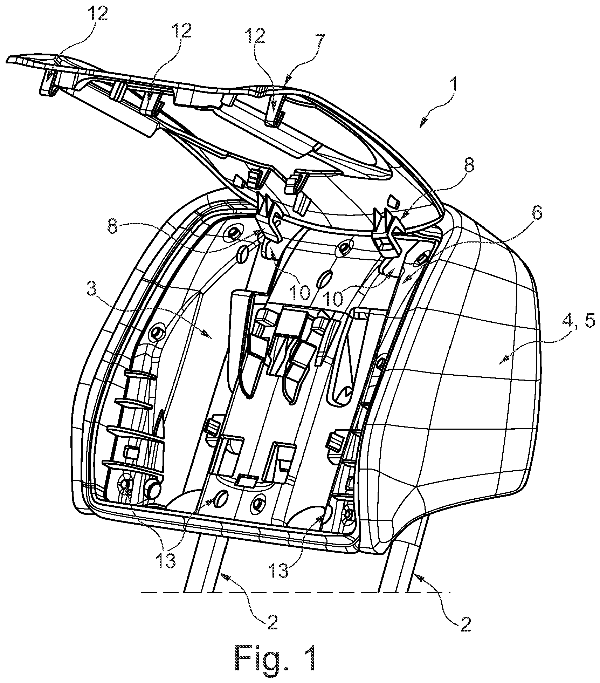

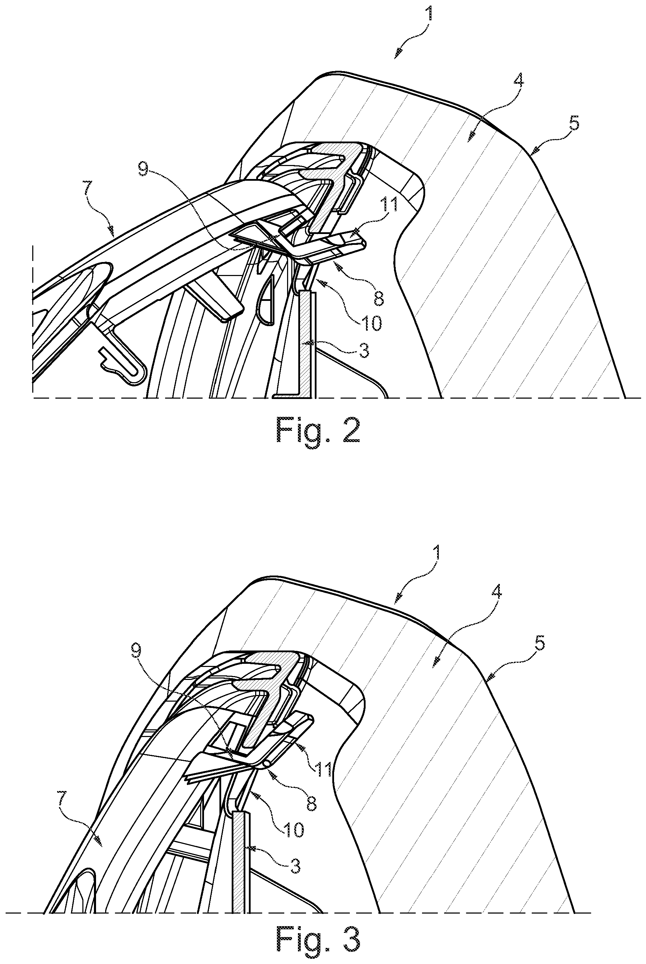

On décrit enfin un procédé de réalisation d'un tel appui-tête 1, ledit procédé comprenant les étapes suivantes :
- prévoir une armature 2 de liaison au dossier dudit siège pourvue d'un boitier 3 en matériau plastique moulé d'absorption d'énergie monté en haut de ladite armature, un bloc 4 de matériau de rembourrage étant disposé contre une face avant dudit boitier, une couche de matériau de revêtement 5 recouvrant ledit bloc, ladite couche comprenant une bande périphérique 6 retournée contre une zone périphérique arrière dudit boitier, ladite bande étant fixée à ladite zone par des moyens de fixation 15,
- prévoir une coque 7 de masquage à associer en arrière dudit boitier, ladite coque comprenant au moins une patte 8 d'ancrage supérieure - respectivement inférieure - faisant saillie de sa face d'envers, ladite patte étant en forme de crochet comprenant une première partie 9 destinée à être insérée dans un orifice 10 prévu en arrière dudit boitier et une deuxième partie 11 destinée à pointer vers le haut - respectivement vers le bas - en prenant appui en périphérie interne dudit orifice, ladite coque comprenant en outre - faisant saillie de sa face d'envers - au moins un moyen d'emboitement 12 inférieur - respectivement supérieur - sur un moyen réciproque 13 prévu en arrière dudit boitier, lesdits moyens étant agencés de sorte que l'emboitement se fasse selon un axe sensiblement longitudinal 14,
- présenter ladite coque en position inclinée par rapport à sa position une fois montée sur ledit boitier, de manière à permettre l'introduction de ladite deuxième partie dans ledit orifice (figure 1),
- introduire ladite deuxième partie dans ledit orifice (figure 2),
- actionner ladite coque en rotation (figure 3) de manière à réaliser, en fin de rotation (figures 4a et 4b), l'emboitement entre un moyen d'emboitement 12 et son moyen réciproque 13, ladite deuxième partie prenant appui en périphérie interne dudit orifice de manière à plaquer ladite coque en périphérie de ladite couche.

## Revendications

1. Appui-tête (1) de siège de véhicule automobile, ledit appui-tête comprenant :
• une armature (2) de liaison au dossier dudit siège,
• un boitier (3) en matériau plastique moulé d'absorption d'énergie monté en haut de ladite armature,
• un bloc (4) de matériau de rembourrage - notamment à base de mousse élastiquement compressible, notamment de polyuréthanne - disposé contre une face avant dudit boitier,
• une couche de matériau de revêtement (5) recouvrant ledit bloc, ladite couche comprenant une bande périphérique (6) retournée contre une zone périphérique arrière dudit boitier, ladite bande étant fixée à ladite zone par des moyens de fixation (15),
• une coque (7) de masquage associé en arrière dudit boitier, ladite coque étant plaquée en périphérie de ladite couche,
ledit appui-tête étant **caractérisé en ce que** :
• ladite coque comprend au moins une patte (8) d'ancrage supérieure - respectivement inférieure - faisant saillie de sa face d'envers, ladite patte étant en forme de crochet comprenant une première partie (9) insérée dans un orifice (10) prévu en arrière dudit boitier et une deuxième partie (11) pointant vers le haut - respectivement vers le bas - en prenant appui en périphérie interne dudit orifice de manière à plaquer ladite coque,
• ladite coque comprend en outre - faisant saillie de sa face d'envers - au moins un moyen d'emboitement (12) inférieur - respectivement supérieur - sur un moyen réciproque (13) prévu en arrière dudit boitier, lesdits moyens étant agencés de sorte que l'emboitement se fasse selon un axe (14) sensiblement longitudinal.

2. Appui-tête selon la revendication 1, **caractérisé en ce que** la coque (7) comprend deux pattes (8) d'ancrage disposées latéralement de part et d'autre.

3. Appui-tête selon l'une des revendications 1 ou 2, **caractérisé en ce que** la coque (7) comprend deux moyens d'emboitement (12) disposés latéralement de part et d'autre.

4. Appui-tête selon l'une quelconque des revendications 1 à 3, **caractérisé en ce qu'**un moyen d'emboitement (12) est sous forme de harpon, ledit harpon étant élastiquement déformable entre une configuration rétractée d'introduction et une configuration déployée d'ancrage de manière à coopérer avec un moyen réciproque (13) en forme d'orifice de retenue dudit harpon en configuration déployée.

5. Procédé de réalisation d'un appui-tête selon l'une quelconque des revendications 1 à 4, ledit procédé comprenant les étapes suivantes :
• prévoir une armature (2) de liaison au dossier dudit siège pourvue d'un boitier (3) en matériau plastique moulé d'absorption d'énergie monté en haut de ladite armature, un bloc (4) de matériau de rembourrage étant disposé contre une face avant dudit boitier, une couche de matériau de revêtement (5) recouvrant ledit bloc, ladite couche comprenant une bande périphérique (6) retournée contre une zone périphérique arrière dudit boitier, ladite bande étant fixée à ladite zone par des moyens de fixation (15),
• prévoir une coque (7) de masquage à associer en arrière dudit boitier, ladite coque comprenant au moins une patte (8) d'ancrage supérieure - respectivement inférieure - faisant saillie de sa face d'envers, ladite patte étant en forme de crochet comprenant une première partie (9) destinée à être insérée dans un orifice (10) prévu en arrière dudit boitier et une deuxième partie (11) destinée à pointer vers le haut - respectivement vers le bas - en prenant appui en périphérie interne dudit orifice, ladite coque comprenant en outre - faisant saillie de sa face d'envers - au moins un moyen d'emboitement (12) inférieur - respectivement supérieur - sur un moyen réciproque (13) prévu en arrière dudit boitier, lesdits moyens étant agencés de sorte que l'emboitement se fasse selon un axe (14) sensiblement longitudinal,
• présenter ladite coque en position inclinée par rapport à sa position une fois montée sur ledit boitier, de manière à permettre l'introduction de ladite deuxième partie dans ledit orifice,
• introduire ladite deuxième partie dans ledit orifice,
• actionner ladite coque en rotation de manière à réaliser, en fin de rotation, l'emboitement entre un moyen d'emboitement et son moyen réciproque, ladite deuxième partie prenant appui en périphérie interne dudit orifice de manière à plaquer ladite coque en périphérie de ladite couche.

## Patentansprüche

1. Kopfstütze (1) für einen Kraftfahrzeugsitz, wobei die Kopfstütze Folgendes umfasst:
- ein Gestell (2) zur Verbindung mit der Rückenlehne des Sitzes,
- ein Gehäuse (3) aus geformtem Kunststoffmaterial zur Absorption von Energie, das auf der Oberseite des Gestells montiert ist,
- einen Block (4) aus Polstermaterial, insbesondere auf der Grundlage von elastisch komprimierbarem Schaum, insbesondere Polyurethan, der gegen eine Vorderseite des Gehäuses angeordnet ist,
- eine Schicht aus Verkleidungsmaterial (5), die den Block bedeckt, wobei die Schicht einen Randstreifen (6) umfasst, des gegen einen hinteren Randbereich des Gehäuses gewendet ist, wobei der Streifen an den Bereich durch Fixierungsmittel (15) fixiert ist,
- eine Abdeckungsschale (7), die hinter dem Gehäuse befestigt ist, wobei die Schale am Umfang der Schicht angebracht ist,
wobei die Kopfstütze **dadurch gekennzeichnet ist, dass**:
- die Schale mindestens eine obere, - bzw. untere - , Verankerungslasche (8) umfasst, die von ihrer Rückseite vorspringt, wobei die Lasche die Form eines Hakens aufweist, umfassend einen ersten Teil (9), der in eine Öffnung (10) eingefügt ist, die hinter dem Gehäuse vorgesehen ist, und einen zweiten Teil (11), der nach oben, - bzw. nach unten -, gerichtet ist, indem er am Innenumfang der Öffnung aufliegt, so dass er die Schale anbringt,
- die Schale außerdem, hervorspringend von ihrer Rückseite, mindestens ein unteres, - bzw. oberes - , Einschiebemittel (12) auf einem reziproken Mittel (13) umfasst, das hinter dem Gehäuse vorgesehen ist, wobei die Mittel derart eingerichtet sind, dass das Einschieben gemäß einer im Wesentlichen längs gerichteten Achse (14) erfolgt.

2. Kopfstütze nach Anspruch 1, **dadurch gekennzeichnet, dass** die Schale (7) zwei Verankerungslaschen (8) umfasst, die seitlich auf beiden Seiten angeordnet sind.

3. Kopfstütze nach einem der Ansprüche 1 oder 2, **dadurch gekennzeichnet, dass** die Schale (7) zwei Einschiebemittel (12) umfasst, die seitlich auf beiden Seiten angeordnet sind.

4. Kopfstütze nach einem der Ansprüche 1 bis 3, **dadurch gekennzeichnet, dass** ein Einschiebemittel (12) die Form einer Harpune aufweist, wobei die Harpune elastisch zwischen einer zurückgezogenen Einführungskonfiguration und einer ausgefahrenen Verankerungskonfiguration verformbar ist, um mit einem reziproken Mittel (13) in Form einer Rückhalteöffnung der Harpune in ausgefahrener Konfiguration zusammenzuarbeiten.

5. Verfahren zur Herstellung einer Kopfstütze nach einem der Ansprüche 1 bis 4, wobei das Verfahren die folgenden Schritte umfasst:
- Vorhersehen eines Gestells (2) zur Verbindung mit der Rückenlehne des Sitzes, das mit einem Gehäuse (3) aus geformtem Kunststoffmaterial zur Absorption von Energie vorgesehen ist, das auf der oberen Seite des Gestells montiert ist, eines Blocks (4) aus Polstermaterial, der gegen eine Vorderseite des Gehäuses angeordnet ist, einer Schicht aus Verkleidungsmaterial (5), die den Block bedeckt, wobei die Schicht einen Randstreifen (6) umfasst, der gegen einen hinteren Randbereich des Gehäuses gewendet ist, wobei der Streifen an den Bereich durch Fixierungsmittel (15) fixiert ist,
- Vorhersehen einer Abdeckungsschale (7), die hinter dem Gehäuse befestigt werden soll, wobei die Schale mindestens eine obere, - bzw. untere - , Verankerungslasche (8) umfasst, die von ihrer Rückseite vorspringt, wobei die Lasche die Form eines Hakens aufweist, umfassend einen ersten Teil (9), der ausgelegt ist, um in eine Öffnung (10) eingeführt zu werden, die hinter dem Gehäuse vorgesehen ist, und einen zweiten Teil (11), der ausgelegt ist, um nach oben, - bzw. nach unten - , gerichtet zu sein, indem er am Innenumfang des Öffnung aufliegt, wobei die Schale außerdem, hervorspringend von ihrer Rückseite, mindestens ein unteres, - bzw. oberes - , Einschiebemittel (12), auf einem reziproken Mittel (13) umfasst, das hinter dem Gehäuse vorgesehen ist, wobei die Mittel derart eingerichtet sind, dass das Einschieben gemäß einer im Wesentlichen längs gerichteten Achse (14) erfolgt,
- Anordnen der Schale in geneigter Position mit Bezug auf ihre Position, nachdem sie auf dem Gehäuse montiert ist, um die Einführung des zweiten Teils in die Öffnung zu ermöglichen,
- Einführen des zweiten Teils in die Öffnung,
- Betätigen der Schale in Rotation, um, am Ende der Rotation, das Einschieben zwischen einem Einschiebemittel und seinem reziproken Mittel durchzuführen, wobei der zweite Teil am Innenumfang der Öffnung aufliegt, um die Schale am Umfang der Schicht anzubringen.

## Claims

1. Headrest (1) for a motor vehicle seat, said headrest comprising:
- a frame (2) linking it to the backrest of said seat,
- a housing (3) made of moulded plastic material for absorbing energy, mounted at the top of said frame,
- a block (4) of padding material, made in particular, from elastically compressible foam, in particular polyurethane, disposed against a front face of said housing,
- a layer of covering material (5) covering said block, said layer comprising a peripheral strip (6) folded back against a rear peripheral area of said housing, said strip being attached to said area by attachment means (15),
- a masking shell (7) associated at the rear of said housing, said shell being clamped at the periphery of said layer,
said headrest being **characterised in that**:
- said shell comprises at least one upper, - respectively lower - , anchoring tab (8) projecting from its rear face, said tab being in the form of a hook comprising a first portion (9) inserted into an opening (10) provided at the rear of said housing and a second portion (11) pointing upwards, - respectively downwards - , bearing on the inner periphery of said opening in such a way as to clamp said shell,
- said shell further comprises, projecting from its rear face, at least one lower, - respectively upper - , means (12) for interlocking with a reciprocal means (13) provided at the rear of said housing, said means being arranged so that the interlocking takes place along a substantially longitudinal axis (14).

2. Headrest according to claim 1, **characterised in that** the shell (7) comprises two anchoring tabs (8) disposed laterally on both sides.

3. Headrest according to one of claims 1 or 2, **characterised in that** the shell (7) comprises two interlocking means (12) disposed laterally on each side.

4. Headrest according to any one of claims 1 to 3, **characterised in that** an interlocking means (12) is in the form of a harpoon, said harpoon being elastically deformable between a retracted configuration for introduction and a deployed anchoring configuration so as to interact with a reciprocal means (13) in the form of an opening for holding said harpoon in the deployed configuration.

5. Method for producing a headrest according to any one of claims 1 to 4, said method comprising the following steps:
- providing a frame (2) for linking it to the backrest of said seat, provided with a housing (3) made of moulded plastic material for absorbing energy mounted at the top of said frame, a block (4) of padding material being disposed against a front face of said housing, a layer of covering material (5) covering said block, said layer comprising a peripheral strip (6) folded back against a peripheral rear area of said housing, said strip being attached to said area by attachment means (15),
- providing a masking shell (7) to be associated with the rear of said housing, said shell comprising at least one upper, - respectively lower - , anchoring tab (8) projecting from its rear face, said tab being in the form of a hook comprising a first portion (9) intended to be inserted in an opening (10) provided at the rear of said housing and a second portion (11) intended to point upwards,
- respectively downwards - , bearing on the inner periphery of said opening, said shell further comprising, projecting from its rear face, at least one lower, - respectively upper - , means (12) for interlocking with a reciprocal means (13) provided at the rear of said housing, said means being arranged so that the interlocking takes place along a substantially longitudinal axis (14),
- presenting said shell in a position inclined with respect to its position once mounted on said housing, so as to allow the introduction of said second portion into said opening,
- introducing said second portion into said opening,
- rotating said shell so as to produce, at the end of rotation, the interlocking between an interlocking means and its reciprocal means, said second portion bearing on the inner periphery of said opening so as to clamp said shell at the periphery of said layer.
